# EUROPÄISCHE PATENTSCHRIFT

(11) **EP 3 052 349 B1**
(45) Veröffentlichungstag und Bekanntmachung des Hinweises auf die Patenterteilung: **02.12.2020**
(21) Anmeldenummer: 14777641.3
(22) Anmeldetag: 01.10.2014
(51) Int. Cl.: B60S 1/10

(54) **STEUERGERÄT FÜR EIN SCHEIBENWISCHERSYSTEM FÜR EIN SCHIENENFAHRZEUG UND VERFAHREN ZUM BETREIBEN EINES SCHEIBENWISCHERSYSTEMS FÜR EIN SCHIENENFAHRZEUG**
CONTROL UNIT FOR A WINDSCREEN WIPER SYSTEM FOR A RAIL VEHICLE AND METHOD FOR OPERATING A WINDSCREEN WIPER SYSTEM FOR A RAIL VEHICLE
APPAREIL DE COMMANDE D'UN SYSTÈME D'ESSUIE-GLACE DESTINÉ À UN VÉHICULE FERROVIAIRE ET DISPOSITIF PERMETTANT DE FAIRE FONCTIONNER UN SYSTÈME D'ESSUIE-GLACE DESTINÉ À UN VÉHICULE FERROVIAIRE

(30) Priorität: 02.10.2013 DE 102013220109
(43) Veröffentlichungstag der Anmeldung: 10.08.2016
(73) Patentinhaber: Knorr-Bremse Gesellschaft mit beschränkter Haftung, 2340 Mödling (AT)
(72) Erfinder: DE VRIES, Gerhardus, A-2340 Mödling (AT); AMTMANN, Oswald, A-2460 Bruck/Leitha (AT)
(74) Vertreter: Aurigium Leischner & Luthe
(86) Internationale Anmeldenummer: PCT/EP2014/071047
(87) Internationale Veröffentlichungsnummer: WO 2015/049290

(56) Entgegenhaltungen:
- WO-A1-97/10977
- WO-A1-2013/139785
- WO-A1-2014/076220
- CN-Y- 2 900 270

## Beschreibung

Die vorliegende Erfindung bezieht sich auf ein Steuergerät für ein Scheibenwischersystem für ein Schienenfahrzeug, auf ein entsprechendes Verfahren zum Betreiben eines Scheibenwischersystems für ein Schienenfahrzeug sowie auf ein entsprechendes Computer-Programmprodukt.

Steuerungen für Scheibenwischer-Waschsysteme sind aus dem Automotiv-, wie auch aus dem Schienenfahrzeugbereich bekannt. Im Bereich der Stadtbahnen oder LRV (LRV = Light Rail Vehicle), wie Straßenbahn und Metro, besteht die Fahrzeugversorgung aus 24V-Batterien mit einer Nennspannung von 24V zuzüglich der üblichen Toleranzen. In diesem Fahrzeugsegment kommen bevorzugt Scheibenwischermotoren mit umlaufender Bewegungsrichtung und nachgeschalteter Hebelkinematik zur Anwendung. Diese Motoren besitzen in der Regel zwei Grundgeschwindigkeiten, wobei die Wahl der Geschwindigkeit über eine weitere Kohlebürste die am Umfang des Stromwenders versetzt angeordnet ist, erfolgt. Diese Motoren besitzen zudem eine als "Parkingplate" bezeichnete Einrichtung, mit der eine Parkstellung in Form eines sich öffnenden Kontaktes am Umfang angefahren werden kann. Die für industrielle Anwendungen verfügbaren Gleichspannungsmotoren sind für die Anwendung als Scheibenwischerantrieb nicht zugänglich, wenn mindestens zwei Geschwindigkeiten erforderlich werden.

Bei Elektrotriebzügen, dieselgetriebenen Triebwagen oder Hochgeschwindigkeitszügen beträgt die Batteriespannung im Allgemeinen mehr als 24V. Typische Spannungen sind bei den genannten Schienenfahrzeugen 72V, 96V und 110V DC. Um Industriemotoren für die Anwendung als Scheibenwischerantrieb zugänglich zu machen, ist ein spezielles Steuergerät mit einem regelbaren Spannungsausgang erforderlich.

Bei den im Automotiv-Bereich eingesetzten Scheibenwischerantrieben ist eine Stellungserkennung nur durch die "Parkingplate" in der Parkposition gegeben. Wird der Wischerarm in der Bewegungsausführung behindert, kann nur durch eine thermische Überwachung im Motor oder eine Erfassung und Überwachung des Motorstromes ein Defekt am Scheibenwischerantrieb verhindert werden.

Scheibenwischerantriebe für den Einsatz im Stadtbahn- oder LRV-Bereich (LRV - tight rail vehicle) bestehen bevorzugt aus speziellen Scheibenwischermotoren mit drei elektrischen Anschlusspunkten. Durch diese dritte Bürste, die versetzt am Umfang angebracht ist, kann ein Teil der Ankerwicklung des permanent-erregten Motors stromlos bleiben. Dadurch stellt sich am Motor eine geringere Drehzahl ein. Die umlaufende Drehbewegung des Motors wird durch eine Hebelkinematik in eine Wischbewegung umgesetzt. Diese Motoren haben in der Regel eine sogenannte "Parkingplate", mit denen in einer ausgezeichneten Stellung des Abtriebes ein Schalter geöffnet wird. Die "Parkingplate" besteht aus mindestens einem Schaltkontakt und einer Leiterbahnfläche auf einer sich mit dem Antrieb bewegenden Isolierplatte. Diese Leiterbahnfläche ist an einer oder mehreren Stellen unterbrochen. Wird im Betrieb des Antriebes nun diese Unterbrechung erreicht, öffnet der elektrische Kontakt und der Antrieb kann damit in der Parkposition abgeschaltet werden. Die Aktivierung der Geschwindigkeitsstufen erfolgt durch einen Bedienschalter. Intervallfunktionen sind durch eigene Zeitgeberbaugruppen (z. B.: Zeitrelais) realisiert.

Aus dem Automotiv-Bereich sind auch Scheibenläufermotoren mit reversierendem Antrieb bekannt, die einen eigenen Motorcontroller am Antrieb besitzen. Die Betriebsvorgabe erfolgt hierbei als digitales, analoges oder digital codiertes Signal als "Wischen langsam" oder "Wischen schnell".

Die Druckschrift WO 2014/076220 A1 offenbart elektropneumatischen Scheibenwischerantrieb für ein Schienenfahrzeug einen Antrieb für einen Scheibenwischer und Pneumatik zum Betreiben eines Antriebs für einen Scheibenwischer.

Es ist die Aufgabe der vorliegenden Erfindung ein verbessertes Scheibenwischersystem für ein Schienenfahrzeug sowie ein verbessertes Verfahren zum Betreiben eines Scheibenwischersystems zu schaffen.

Dokument WO 97/10977 A1 offenbart ein Steuergerät gemäß dem Oberbegriff des Anspruchs 1.

Diese Aufgabe wird durch ein Steuergerät für ein Scheibenwischersystem für ein Schienenfahrzeug, ein Verfahren zum Betreiben eines Scheibenwischersystems für ein Schienenfahrzeug sowie ein entsprechendes Computer-Programmprodukt gemäß den unabhängigen Ansprüchen gelöst. Alternative Ausführungsformen ergeben sich aus den Unteransprüchen und der nachfolgenden Beschreibung.

Im Bereich der Schienenfahrzeuge kommen unterschiedliche Scheibenwischersysteme zum Einsatz. Dabei kann der Antrieb sowohl elektrisch als auch elektropneumatischen erfolgen. Um den Einsatz flexibler zu gestalten, kann über einen Sensor beispielsweise Regen auf einer Scheibe erkannt werden oder eine Position eines Scheibenwischers bestimmt werden. Dabei kann ein entsprechender Versorgungsteil eines Steuergeräts für ein Scheibenwischersystem eine Varianz und Toleranz einer anliegenden Versorgungsspannung ausgleichen.

Ein Steuergerät für ein Scheibenwischersystem für ein Schienenfahrzeug weist die folgenden Merkmale auf:
eine Betriebsfunktionsschnittstelle, wobei die Betriebsfunktionsschnittstelle ausgebildet ist eine Information über einen Betriebsmodus des Scheibenwischersystems zu empfangen;
eine Sensor-Schnittstelle, die ausgebildet ist, zumindest ein analoges und/oder digitales Sensorsignal zu empfangen;
eine Steuereinrichtung, welche ausgebildet ist, unter Verwendung der Information über den Betriebsmodus und/oder des Sensorsignals zumindest ein Steuersignal für das Scheibenwischersystem bereitzustellen;
ein Steuerausgang, der ausgebildet ist, das zumindest eine Steuersignal auszugeben; und
ein Versorgungsspannungsanschluss, der ausgebildet ist, eine anliegende Spannung Schnittstellen und Einrichtungen des Steuergeräts, insbesondere der Steuereinrichtung, bereitzustellen.

Unter einem Schienenfahrzeug kann im Allgemeinen ein spurgebundenes Fahrzeug verstanden werden, wie eine Lokomotive, ein Triebzug, ein Treibwagen, eine Straßenbahn, ein U-Bahnfahrzeug, ein Waggon wie ein Personen- bzw. Reisezug- und/oder Güterwagen. Insbesondere kann es sich bei dem Schienenfahrzeug um ein Hochgeschwindigkeits-Schienenfahrzeug handeln. In einer weiteren Ausführungsform kann das Scheibenwischersystem auch für ein Nutzfahrzeug und/oder ein Flurförderzeug verwendet werden. Unter einem Scheibenwischersystem kann ein Scheibenwischerantrieb verstanden werden. Das Schienenfahrzeug kann zumindest einen elektrischen oder elektropneumatischen Scheibenwischerantrieb aufweisen. Unter einer Pneumatik kann eine Vorrichtung verstanden werden, die Druckluft zur Verrichtung von mechanischer Arbeit einsetzt. Die Pneumatik kann einen Antrieb antreiben. Unter einem Scheibenwischersystem oder Scheibenwischerantrieb kann ein Antrieb für einen Scheibenwischer oder ein Wischerantrieb verstanden werden. Der Antrieb kann einen Scheibenwischer bewegen und ausgebildet sein, linear oszillierende Axialbewegungen der Wischerwelle zu bewirken. Unter einer alternierenden Rotationsbewegung kann eine linear oszillierende Axialbewegung einer Welle insbesondere einer Wischerwelle verstanden werden. Unter einem Scheibenwischer kann eine Vorrichtung zum Säubern einer Scheibe insbesondere einer Frontscheibe beispielsweise eines Schienenfahrzeugs verstanden werden. Ein Scheibenwischer kann aus einem Wischerarm, einem Wischerblatt, einer Wischerachse und einem Antrieb bestehen. Unter einem Betriebsmodus des Scheibenwischerssystems kann eine Vorgabe des Betriebsmodus wie beispielsweise parken, Intervall mit mehreren Stufen, wischen mit mehreren Stufen, Regensensorbetrieb oder Dauerbetrieb verstanden werden. Dabei kann eine Information über den Betriebsmodus als ein Signal über die Betriebsfunktion Schnittstelle empfangen bzw. eingelesen werden. Unter einer Information über den Betriebsmodus kann Betriebsmodus-Signal verstanden werden. Unter einem analogen Sensorsignal kann ein Spannungssignal, welches eine von einem Sensor erfasste physikalische Größe repräsentiert, verstanden werden. Unter einem digitalen Sensorsignal kann ein TTL-Signal oder digitales Signal verstanden werden, welches eine von einem Sensor erfasste physikalische Größe repräsentiert. Dabei kann es sich bei dem Sensor um einen Regensensor oder einen Drehwinkelsensor handeln. Unter der Steuereinrichtung kann ein Mikrocontroller oder eine digitale Recheneinheit verstanden werden. Die Steuereinrichtung kann ausgebildet sein, analoge oder digitale Signale zu empfangen und auszugeben. Unter einem Steuerausgang kann eine Schnittstelle verstanden werden, welche ausgebildet ist, ein Steuersignal bereitzustellen. Unter einem Versorgungsspannungsanschluss kann eine Schnittstelle verstanden werden, die ausgebildet ist der Steuereinrichtung, der Sensor-Schnittstelle, sowie der Betriebsfunktionsschnittstelle eine konstante Spannung bereitzustellen. Der Versorgungsspannungsanschluss kann ausgebildet sein eine Spannung in einem vordefinierten Spannungsbereich, insbesondere in einem Spannungsbereich zwischen 24 V und 110 V DC mit entsprechenden Toleranzen, zu empfangen, und eine konstante, insbesondere stabile, Spannung bereitzustellen.

Ferner kann der Steuerausgang ausgebildet sein, zumindest ein pulsweitenmoduliertes Signal auszugeben, um zumindest einen Elektromotor anzutreiben. Der Steuerausgang kann ausgebildet sein, eine Mehrzahl digitaler Signale auszugeben, um zumindest ein Magnetventil eines elektropneumatischen Scheibenwischerantriebs anzusteuern. Wenn das Scheibenwischersystem einen elektrischen Antrieb umfasst, kann der elektrische Antrieb über ein pulsweitenmoduliertes Signal angesteuert werden. Wenn das Scheibenwischersystem einen elektropneumatischen Antrieb umfasst, kann dieser über ein digitales Signal oder eine Mehrzahl digitaler Signale angesteuert werden. Dabei kann es sich bei dem digitalen Signal oder der Mehrzahl digitaler Signale um pulsweitenmodulierte Signale handeln. Wenn an dem Steuerausgang eine Mehrzahl digitaler Signale ausgegeben werden, so können diese ausgebildet sein, einen Mehrquadrantensteller, insbesondere einen Vierquadrantensteller, anzusteuern.

In einer Ausführungsform umfasst die Sensor-Schnittstelle zumindest einen schaltbaren Versorgungsanschluss für einen Drehwinkelsensor und gleichzeitig oder alternativ für einen Regensensor. Über den Versorgungsanschluss kann eine Versorgungsspannung für den Drehwinkelsensor oder den Regensensor bereitgestellt werden. Allgemein formuliert kann über die Sensor-Schnittstelle ein Sensor versorgt werden.

Gemäß der Erfindung ist die Betriebsfunktionsschnittstelle und ergänzend oder alternativ die Sensor-Schnittstelle als eine Busschnittstelle, insbesondere als LIN-Bus-Schnittstelle, ausgebildet. Über eine Busschnittstelle können entsprechende Bussensoren einfach und effizient mit dem Steuergerät verbunden werden. Als Busschnittstelle kann eine LIN-Busschnittstelle oder eine CAN-Bus-Schnittstelle verwendet werden. Dabei kann die Busschnittstelle die Betriebsfunktionsschnittstelle sowie die Sensor-Schnittstelle umfassen. Dabei kann die Busschnittstelle bidirektional ausgebildet sein. Die Betriebsfunktionsschnittstelle und gleichzeitig oder alternativ die Sensor-Schnittstelle kann ausgebildet sein, zumindest ein Stromsignal zwischen 0 mA und 20 mA und alternativ oder ergänzend zumindest ein Spannungssignal und alternativ oder ergänzend zumindest ein PWM-Signal zu empfangen und/oder entsprechend einer Auswertungsvorschrift auszuwerten. Die Betriebsfunktionsschnittstelle sowie die Sensor-Schnittstelle können als analoge, digitale oder Busschnittstelle ausgebildet sein. Unter einer Auswertungsvorschrift kann ein Algorithmus oder eine Verarbeitungsvorschrift verstanden werden, der/die es ermöglicht, in einem empfangenen Signal enthaltene Informationen zu extrahieren. Dabei können die Betriebsfunktionsschnittstelle sowie die Sensor-Schnittstelle auch hybrid ausgebildet sein, das heißt, dass sowohl analoge als auch digitale Signale empfangen oder ausgegeben werden können.

Das Steuergerät kann ein Gehäuse aufweisen, wobei das Gehäuse aus Stahlblech und gleichzeitig oder alternativ aus nicht rostendem Material gefertigt sein kann. Das Gehäuse kann einen Oberflächenschutz aufweisen. Durch ein Gehäuse kann das Steuergerät für den Einsatz in einem Schienenfahrzeug vor Umwelteinflüssen geschützt werden. Dabei kann das Gehäuse eine mechanisch stabile Ausführung des Steuergeräts schaffen.

Ein Verfahren zum Betreiben eines Scheibenwischersystems für ein Schienenfahrzeug umfasst die folgenden Schritte:
Einlesen eines Betriebsmodus-Signals, wobei das Betriebsmodus-Signal eine Information über einen zu steuernden Betriebsmodus des Scheibenwischersystems repräsentiert;
Erstellen eines Steuersignals unter Verwendung des Betriebsmodus-Signals; und
Ausgeben des Steuersignals an das Scheibenwischersystem als ein analoges und/oder digitales Signal.

Auch durch das Verfahren zum Betreiben eines Scheibenwischersystems für ein Schienenfahrzeug kann die der Erfindung zugrunde liegende Idee effizient umgesetzt werden. Das Verfahren kann ausgeführt werden, während das Schienenfahrzeug in Bewegung ist.

Im Schritt des Einlesens kann ein Sensorsignal eingelesen werden, wobei im Schritt des Erstellens das Steuersignal unter Verwendung des Sensorsignals erstellt wird. Unter dem Sensorsignal kann ein Signal eines Drehwinkelsensors oder eines regen Sensors verstanden werden. Somit kann das Steuersignal unter Verwendung einer Information des Regensensors im Intervallbetrieb die Länge der Pausen in Abhängigkeit einer Regenstärke oder im Dauerbetrieb die Drehgeschwindigkeit der Wischerblätter in Abhängigkeit der Regenstärke erstellen.

Das Verfahren zum Betreiben eines Scheibenwischersystems kann einen Schritt des Bereitstellens einer Versorgungsspannung für einen Sensor umfassen. Dadurch kann ein Sensor angesteuert werden, der für seinen Betrieb zum erfassen einer physikalischen Größe eine eigene Spannungsversorgung erfordert.

Die Steuereinrichtung des Steuergeräts für ein Scheibenwischersystem für ein Schienenfahrzeug kann ausgebildet sein, um die Schritte einer Variante eines hier vorgestellten Verfahrens in entsprechenden Einrichtungen durchzuführen bzw. umzusetzen. Auch durch diese Ausführungsvariante der Erfindung in Form einer Steuereinrichtung kann die der Erfindung zugrunde liegende Aufgabe schnell und effizient gelöst werden.

Unter einer Steuereinrichtung oder einem Steuergerät kann vorliegend ein elektrisches Gerät verstanden werden, das Sensorsignale verarbeitet und in Abhängigkeit der Sensorsignale Steuer- und/oder Datensignale ausgibt. Die Schnittstellen der Steuereinrichtung können hard- und/oder softwaremäßig ausgebildet sein. Bei einer hardwaremäßigen Ausbildung können die Schnittstellen beispielsweise Teil eines sogenannten System-ASICs sein, der verschiedenste Funktionen der Steuereinrichtung beinhaltet. Die Schnittstellen können jedoch auch als eigene, integrierte Schaltkreise ausgebildet sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher gespeichert sein kann und zur Durchführung des Verfahrens nach einer der vorstehend beschriebenen Ausführungsformen verwendet wird, wenn das Computerprogrammprodukt auf einer Steuereinrichtung ausgeführt wird.

Als ein Aspekt der vorgestellten Erfindung wird ein Steuergerät vorgeschlagen, das aus einer bestückten Leiterkarte besteht, die in ein Metallgehäuse eingebaut ist. Das Metallgehäuse kann hierbei aus Stahlblech mit entsprechendem Oberflächenschutz oder aus nicht-rostendem Material ausgeführt sein. Das Steuergerät besitzt ferner eine oder mehrere Steckverbindungen zum Anschluss der Zu- und Ableitungen. Ein Vorteil besteht hierbei je nach Ausführungsform in der Kombination der Eingänge und Ausgänge und der Verarbeitung von digitalen und analogen Eingangssignalen wie beispielsweise Drehwinkelsensor, Regensensor und Informationen anderer Scheibenwischersystemkomponenten, wie beispielsweise weiterer Steuergeräte zur Synchronisation von zwei oder mehreren Wischerantrieben.

Die Steuergeräte mit Einquadranten- oder Mehrquadranten-PWM ermöglichen die Verwendung von Industrieantrieben, wie beispielsweise bürstenbehaftete permanent-erregte DC-Antriebsmotoren. Die Beschränkung auf spezielle Scheibenwischermotoren, die in der Regel aus einem DC-Motor mit drei Kohlebürsten, einem Schneckenradgetriebe und einer "Parkingplate" bestehen, ist damit nicht erforderlich. Bei Versorgung mittels PWM ist eine Anpassung der Wischgeschwindigkeit, aber auch eine konstante Wischgeschwindigkeit auch bei unterschiedlichen Reibungszuständen auf der zu bewischenden Fahrzeugscheibe möglich.

Vorteilhaft kann eine Variante eines hier vorgestellten Steuergeräts in Scheibenwischersystemen für alle Arten von Schienenfahrzeugen verwendet werden.

In einer Ausführungsform kann das Steuergerät aus einer elektronischen Schaltung mit einem Mikrocontroller und mit mehreren Eingängen für die Vorgabe der Betriebsmodi und mehreren Ausgängen, sowie Versorgungspannungsanschlüssen bestehen. Unter Betriebsmodi kann Parken, Intervall mit mehreren Stufen, Wischen mit mehreren Stufen sowie Regensensorbetrieb verstanden werden.

Ferner kann das Steuergerät mit einem Ein- oder Mehr-Quadranten PWM-Ausgang für den Betrieb an einem Industriemotor in der Anwendung als Scheibenwischermotor für Schienenfahrzeuge ausgebildet sein.

Für den Einsatz mit einem elektropneumatischen Scheibenwischerantrieb kann das Steuergerät mehrere digitale Ausgänge zum Anschluss von Magnetventilen eines elektropneumatischen Scheibenwischerantriebes umfassen.

In einer Ausführungsform kann das Steuergerät abschaltbare Versorgungsanschlüsse für den Anschluss des Drehwinkelsensors und gleichzeitig oder alternativ des Regensensors mit entsprechend den Bedürfnissen angepassten und stabilisierten Spannungsniveaus umfassen.

Das Steuergerät kann einen Normstromsignaleingang von 0 bis 20mA zur Verarbeitung des Stellungssignals des Drehwinkelsensors aufweisen. Damit ist die Position des Wischerarmes und des Wischerblattes zu jedem Zeitpunkt bekannt. Es kann eine allfällige Blockade oder Behinderung des Wischerarmes bzw. des Wischerblattes sofort erkannt werden, lange bevor eine Abschaltung des Antriebsmotors infolge von Übertemperatur oder Überlast erfolgt.

In einer Ausführungsform kann das Steuergerät einen analogen Eingang zur Verarbeitung des PWM- oder Schaltsignales handelsüblicher Regensensoren mit analogem Ausgang umfassen. Der Eingang kann hierbei aus einem RC-Tiefpass bestehen, wobei der RC-Tiefpass die Signalspannung in ein kontinuierliches Signal umgeformen und für den Microcontroller aufbereiten kann. Bei Verwendung von Regensensoren mit LIN-Bus oder CAN-Bus ist auch eine Signalwandlung in ein analoges Signal oder eine direkte Verbindung bei Verwendung eines LIN-Bus- oder CAN-Bus-Anschlusses auf der Steuerelektronik möglich.

Alternativ oder ergänzend zu der Sensor-Schnittstelle, insbesondere einer analog ausgebildeten Sensor-Schnittstelle, kann das Steuergerät über zumindest einen LIN-Datenbus-Anschluss verfügen, um einen LIN-Bus-Regensensor oder einen anderen LIN-Bus-Sensor oder -Aktuator einzulesen oder anzusteuern.

Günstig ist es auch, wenn das Steuergerät über eine Einrichtung zur Bildung von synchronisierten Wischerantrieben verfügt, wobei jeweils ein Steuergerät einen Wischerantrieb bedient. Eine Synchronisation kann bevorzugt in der Umkehrposition erfolgen. Hierbei kann der erste der zu synchronisierenden Wischerantriebe, der die Umkehrposition erreicht, dort angehalten werden, bis auch alle weiteren Wischerantriebe die Umkehrposition erreicht haben. Erst ab diesem Zeitpunkt kann die nächste Wischbewegung der Wischerantriebe erfolgen. Sollte es zu einem vollständigen Ausfall oder einer nicht vorübergehenden Behinderung eines der Wischerantriebe kommen, kann in Abhängigkeit der Programmierung der Steuergeräte auch ein teilsynchroner Betrieb bei mindestens drei zu synchronisierenden Wischerantrieben oder eine Aufhebung der Synchronisation bei zwei Wischerantrieben erfolgen. Sobald alle zu synchronisierenden Wischerantriebe wieder voll funktionstüchtig sind, kann die vollständige Synchronisation wieder durchgeführt werden. Für diese Synchronisation kann beispielsweise bei zwei Wischerantrieben ein Informationsaustausch derart erfolgen, dass mit einem digitalen Signal die Bewegung des Wischerantriebes und mit einem zweiten Signal das Erreichen der Synchronisationsstellung vorliegt. Neben der Synchronisation in der Synchronisationsposition kann auch eine Anpassung der Bewegungsgeschwindigkeit der Wischerantriebe erfolgen. Jener Wischerantrieb, der in der Bewegungsgeschwindigkeit unter den Sollvorgaben bleibt, kann eine höhere PWM-Spannung erfahren, jener Wischerantrieb, der eine über den Sollvorgaben bestehende Bewegungsgeschwindigkeit erfährt, kann eine geringere PWM-Spannung erfahren.

In einer Ausführungsform der vorliegenden Erfindung kann das Steuergerät einen Eventspeicher umfassen, in dem während des Einsatzes auftretende Events, Fehler oder andere registrierbare Informationen abgelegt werden. Jedem Event kann hierbei ein Zeitstempel zugeordnet werden, damit bei einer zu einem späteren Zeitpunkt stattfindenden Analyse der Events eine zeitliche Zuordnung möglich ist. Der Zeitstempel kann entweder eine Echtzeituhr, eine zur Verfügung gestellte Systemzeit oder auch nur ein im Betrieb hochgezählter Betriebscounter mit festem Zeitschritt sein.

Die der Erfindung zugrunde liegende Idee kann auch mit einer entsprechend dem Einsatzfall ausgeformten Software zum Betrieb eines Scheibenwischersystems umgesetzt werden. Diese Software kann in Maschinensprache, einer höheren Programmiersprache oder auch in Form einer grafischen Programmiersprache ausgeführt sein. Die Steuerungs- und Regellogik kann hierbei als Ablaufsteuerung, als "State-Machine" oder auf Basis eines Fuzzy-Regelalgorithmus basieren.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Schienenfahrzeugs mit einem Steuergerät für ein Scheibenwischersystem gemäß einem Ausführungsbeispiel der vorliegenden Erfindung;
- Fig. 2: eine schematische Darstellung eines Steuergeräts für ein Scheibenwischersystem für ein Schienenfahrzeug gemäß einem Ausführungsbeispiel der vorliegenden Erfindung;
- Fig. 3: eine Darstellung eines Steuergeräts für ein Scheibenwischersystem gemäß einem Ausführungsbeispiel der vorliegenden Erfindung;
- Fig. 4: einen Ablaufplan eines Verfahrens zum Betreiben eines Scheibenwischersystems für ein Schienenfahrzeug gemäß einem Ausführungsbeispiels der vorliegenden Erfindung;
- Fig. 5: ein Blockschaltbild eines Steuergeräts für ein Scheibenwischersystem gemäß einem Ausführungsbeispiel der vorliegenden Erfindung;
- Fig. 6: einen Schaltplan einer Eingangsbeschaltung für eine Auswertung eines Regensensors für ein Steuergerät gemäß einem Ausführungsbeispiel der vorliegenden Erfindung;
- Fig. 7: ein Platinenlayout für ein Steuergerät für ein Scheibenwischersystem gemäß einem Ausführungsbeispiel der vorliegenden Erfindung;
- Fig. 8: ein Blockschaltbild eines Steuergeräts für ein Scheibenwischersystem gemäß einem Ausführungsbeispiel der vorliegenden Erfindung;
- Fig. 9: ein Platinenlayout für ein Steuergerät für ein Scheibenwischersystem gemäß einem Ausführungsbeispiel der vorliegenden Erfindung; und
- Fig. 10: eine Darstellung eines Steuergeräts für ein Scheibenwischersystem in einem Gehäuse gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

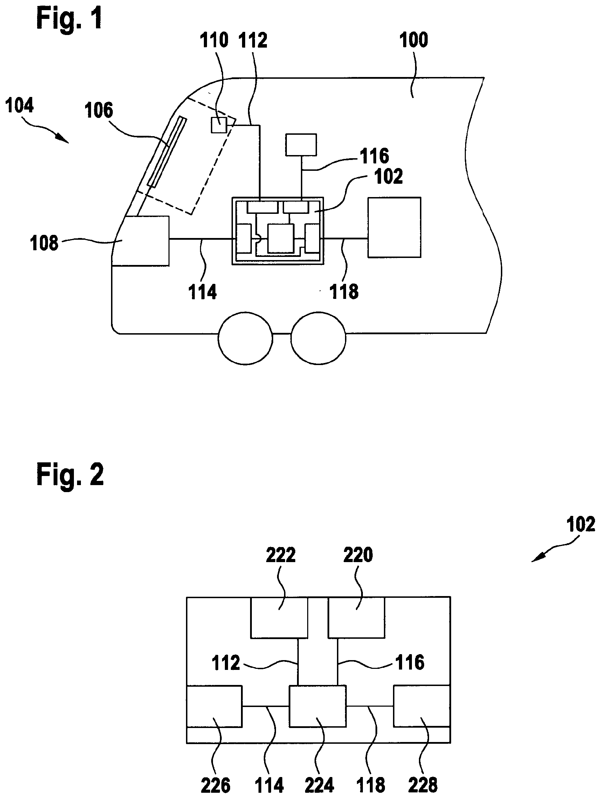

Fig. 1 zeigt eine schematische Darstellung eines Schienenfahrzeugs 100 mit einem Steuergerät 102 für ein Scheibenwischersystem 104 für das Schienenfahrzeug 100 gemäß einem Ausführungsbeispiel der vorliegenden Erfindung. Das Scheibenwischersystem umfasst einen Scheibenwischer 106 sowie einen Antrieb 108, beziehungsweise einen Scheibenwischerantrieb 108. Je nach Ausführungsbeispiel handelt es sich bei dem Antrieb 108 um einen elektrischen oder elektropneumatischen Antrieb 108. Bei dem gezeigten Ausführungsbeispiel ist an einer Scheibe des Schienenfahrzeugs ein Sensor 110 angeordnet. Dabei handelt es sich in dem gezeigten Ausführungsbeispiel um einen Regensensor. Der Sensor 110 ist ausgebildet, ein Sensorsignal 112 auszugeben. Der Sensor 110 ist mit einer Schnittstelle des Steuergeräts 102 verbunden, sodass das Sensorsignal 112 am Steuergerät anliegt. Eine Schnittstelle des Steuergeräts 102 ist mit dem Antrieb 108 des Scheibenwischersystems 104 verbunden, um ein Steuersignal 114 zu übertragen. An einer Schnittstelle des Steuergeräts 102 liegt ein Signal an, welches eine Information 116 über einen Betriebsmodus des Scheibenwischersystems 104 repräsentiert. Das die Information 116 über einen Betriebsmodus repräsentierende Signal kann als Betriebsmodus-Signal 116 bezeichnet werden. An einer Schnittstelle des Steuergeräts 102 liegt eine Versorgungsspannung 118 an.

In einem Ausführungsbeispiel wird ein Regensensor 110 verwendet. Hierbei befindet sich an der Windschutzscheibe des Schienenfahrzeugs 100 im bewischten Bereich ein Sensor 110, der ein dem Benetzungsgrad entsprechendes Signal 112 zur Verfügung stellt. Auch diese Funktion ist neben den üblichen Betriebsartenvorgaben in einem Ausführungsbeispiel des Steuergeräts 102 integriert.

In einem Ausführungsbeispiel wird eine Erfassung der aktuellen Position der Wischerarme 106 und der Wischerblätter 106 durchgeführt. Eine Stellungserkennung über den gesamten Bewegungsbereich mit einer überwachenden Funktion zum Selbstschutz ist in diesem genannten Ausführungsbeispiel im Steuergerät 102 integriert.

In einem Ausführungsbeispiel sind die für den Betrieb von Scheibenwischerantrieben 108 erforderlichen Funktionen in einer eigenen elektronischen Baugruppe 102 integriert. Die Versorgung des Steuergeräts erfolgt aus dem Fahrzeug-Bordnetz von dem Schienenfahrzeug 100 unter Berücksichtigung der auf diesen Fahrzeugen bestehenden elektrischen Eigenschaften einschließlich Spannungsschwankungen und EMV. Das Steuergerät 102 stellt Betriebsfunktionseingänge bereit. Dabei ist das Steuergerät ausgebildet, analoge stetige Signale zur Stellungserfassung der Wischerwelle bzw. Wischerarm und Wischblatt zu verarbeiten. Ein spannungsregelbarer Ausgang für die Versorgung des Wischermotors - im 1 Quadranten bis 4 Quadranten PWM Pulsweiten-Modulierten Betrieb stellt ein Steuersignal 114 bereit. Dabei umfasst das Steuergerät einen Anschluss von zumindest einem Regensensor. Vorteilhaft schafft ein Ausführungsbeispiel des Steuergeräts eine mechanisch stabile und für den Einsatz auf LRV-Fahrzeugen taugliche Ausführung. Bei Anwendung mit elektropneumatischen Wischerantrieben werden anstelle des PWM-Ausgangs mehrere digitale Ausgänge für den Anschluss von elektropneumatischen Ventilen vorgesehen.

Fig. 2 zeigt eine schematische Darstellung eines Steuergeräts 102 für ein Scheibenwischersystem für ein Schienenfahrzeug gemäß einem Ausführungsbeispiel der vorliegenden Erfindung. Bei dem Steuergerät 102 kann es sich um ein Ausführungsbeispiel eines in Fig. 1 gezeigten Steuergeräts 102 für ein Scheibenwischersystem für ein Schienenfahrzeug handeln. Bei dem Schienenfahrzeug 100 sowie dem Scheibenwischersystem 104 kann es sich um ein Ausführungsbeispiel entsprechend Fig. 1 handeln. Das Steuergerät 102 umfasst eine Betriebsfunktionsschnittstelle 220, eine Sensor-Schnittstelle 222, eine Steuereinrichtung 224, einen Steuerausgang 226 sowie einen Versorgungsspannungsanschluss 228. die Betriebsfunktionsschnittstelle 220, die Sensor-Schnittstelle 222, der Steuerausgang 226 sowie der Versorgungsspannungsanschluss 228 können jeweils oder zusammenfassend als Schnittstelle bezeichnet werden.

Die Betriebsfunktionsschnittstelle 220 ist ausgebildet, eine Information 116 über einen Betriebsmodus des Scheibenwischersystems zu empfangen. Die Sensor-Schnittstelle 222 ist ausgebildet, zumindest ein analoges und/oder digitales Sensorsignal 112 zu empfangen. Der Steuerausgang 226 ist ausgebildet, ein Steuersignal 114 auszugeben. Der Versorgungsspannungsanschluss 228 ist ausgebildet, eine anliegende Spannung 118 den Schnittstellen 220, 222, 226, 228 und gleichzeitig oder alternativ der Steuereinrichtung 224 bereitzustellen. Die Schnittstellen 220, 222, 226, 228 sind mit der Steuereinrichtung 224 verbunden. Die Steuereinrichtung 224 ist ausgebildet, unter Verwendung der Information 116 über den Betriebsmodus und ergänzend oder alternativ des Sensorsignals 112 zumindest das Steuersignal 114 für das Scheibenwischersystem bereitzustellen.

In einem Ausführungsbeispiel ist der Steuerausgang 226 ausgebildet, zumindest ein pulsweitenmoduliertes Signal als Steuersignal 114 auszugeben, um zumindest einen Elektromotor anzutreiben. In einem Ausführungsbeispiel ist der Steuerausgang 226 ausgebildet eine Mehrzahl digitaler Signale auszugeben, um zumindest ein Magnetventil eines elektropneumatischen Scheibenwischerantriebs anzusteuern. Dabei ist in einem Ausführungsbeispiel der Steuer Ausgang 226 ausgebildet, sowohl ein pulsweitenmoduliertes Signal als auch eine Mehrzahl digitaler Signale auszugeben.

Die Sensor-Schnittstelle 222 umfasst in einem Ausführungsbeispiel zumindest einen schaltbaren Versorgungsanschluss für einen Drehwinkelsensor oder für einen Regensensor. Dabei kann der eine Versorgungsspannung für den schaltbaren Versorgungsanschluss über die Steuereinrichtung 224 oder direkt über den Versorgungsspannungsanschluss 228 an der Sensor-Schnittstelle 222 bereitgestellt werden.

Die Betriebsfunktionsschnittstelle 220 und gleichzeitig oder alternativ die Sensor-Schnittstelle 222 sind in einem Ausführungsbeispiel als eine Busschnittstelle, insbesondere LIN-Bus-Schnittstelle ausgebildet. Dabei sind in einem Ausführungsbeispiel die Schnittstellen 220,222 oder 226 als reine Busschnittstellen oder alternativ als hybride Schnittstellen, die sowohl analoge oder digitale Signale verarbeiten als auch eine Buskommunikation beispielsweise über LIN-Bus oder CAN-Bus ermöglichen.

In einem Ausführungsbeispiel ist die Betriebsfunktionsschnittstelle 220 und ergänzend oder alternativ die Sensor-Schnittstelle 222 ausgebildet, zumindest ein Stromsignal zwischen 0 mA und 20 mA, ein Spannungssignal und gleichzeitig oder alternativ zumindest ein PWM-Signal zu empfangen und/oder entsprechend einer Auswertungsvorschrift auszuwerten. Wenn es sich bei den empfangenen Signalen um digitale Signale handelt, so ist die Steuereinrichtung 224 dazu ausgebildet, die entsprechenden Signale einzulesen und die darin enthaltene Information zu extrahieren. Wenn es sich bei den empfangenen Signalen um analoge Signale handelt, so ist zwischen der entsprechenden Schnittstelle 220, 222 und der Steuereinrichtung 224 eine entsprechende Logik zur Analog-DigitalWandlung vorgesehen oder alternativ verfügt die Steuereinrichtung 224 über einen entsprechenden Analog-Digital-Wandler. Gleiches gilt in einem Ausführungsbeispiel umgekehrter Richtung für den Steuerausgang 226, wobei ein von der Steuereinrichtung 224 bereitgestelltes Steuersignal 114 in einem Ausführungsbeispiel über einen Digital-Analog-Wandler geleitet wird und dann dem Steuerausgang 226 bereitgestellt zu werden.

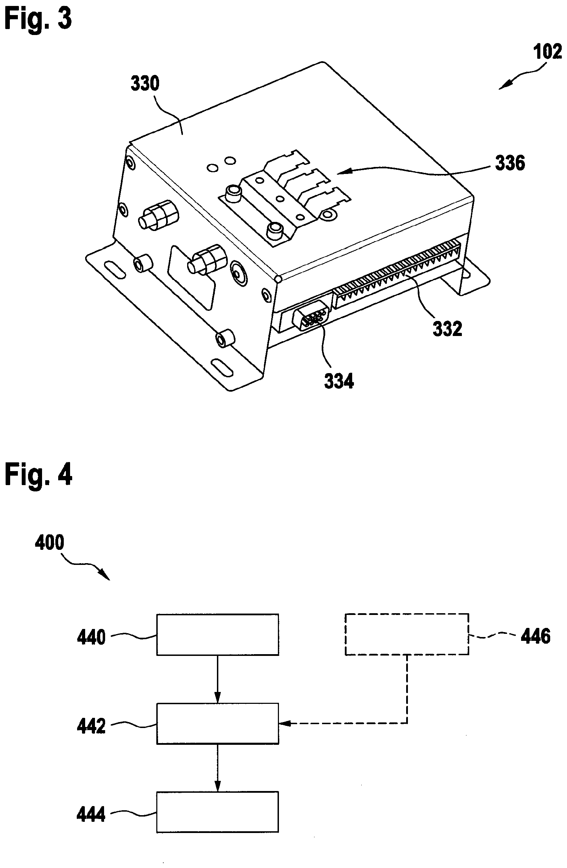

In einem Ausführungsbeispiel umfasst das Steuergerät 102 ein Gehäuse. Ein entsprechendes Ausführungsbeispiel ist in Fig. 3 dargestellt.

In einem Ausführungsbeispiel werden durch das Steuergerät 102 mehrere Funktionen in einer Baugruppe vereint. Das Steuergerät 102 besteht hierbei aus zwei Gehäuseteilen, die aus Stahlblech in korrosionsgeschützter Ausführung oder aus nicht-rostendem Stahl bestehen, siehe hierzu auch Fig. 3. Auf die Bodenplatte ist die Steuerelektronik bestehend aus einer bestückten Leiterkarte montiert. Die Leiterkarte besitzt mindestens einen Steckanschluss. In der Anwendung als Steuergerät mit PWM-Ausgang werden typisch zwei Steckverbinder, in der Anwendung als Steuergerät für elektropneumatische Antriebe mindestens vier Steckanschlüsse verwendet. Die Anzahl der Steckanschlüsse kann aber abhängig von den Spannungsniveaus und den Anforderungen gewählt bzw. ausgeführt sein.

In der Ausführung als Steuergerät 102 mit PWM stellt ein Steckanschluss die folgenden Anschlüsse zur Verfügung: Anschluss der Versorgung zum Batterienetz des Fahrzeugs, digitale Eingänge für die Betriebsartenwahl (Parken, Intervallstufen, Betrieb mit dem Regensensor, Wischen in mehreren Geschwindigkeiten), den Anschluss für den Positionssensor (Drehwinkelsensor), die Versorgung des Positionssensors, den Anschluss des Regensensors und die Versorgung des Regensensors, sowie den Anschluss des Scheibenwischermotors in Form einer PWM (pulsweitenmodulierte Spannung).

In einem Ausführungsbeispiel dient ein zweiter Stecker der Programmierung (Flashen) des Betriebsprogrammes, wie auch der Diagnose mit einem Datenendgerät (PC oder Notebook).

In einem Ausführungsbeispiel als Steuergerät 102 für elektropneumatische Antriebe wird mit einem Steckanschluss die Versorgung realisiert. Mit einem weiteren Steckanschluss erfolgt der Anschluss der Betriebsmodi. An einen dritten Steckanschluss werden die Pneumatikventile angeschlossen, und über einen vierten Anschluss erfolgt die Kontaktierung von Drehwinkelsensor und Regensensor. Die Diagnose wird bevorzugt über einen Diagnosestecker realisiert.

In Abhängigkeit der gewählten Betriebsart kann das Steuergerät 102 den Antriebsmotor des Scheibenwischersystems in unterschiedlichen Modi betreiben. In der Parkstellung wird der Motor nicht mit Spannung versorgt. Es erfolgt keine Bewegung des Motors.

Im Intervallbetrieb wird der Motor mit einem definierten PWM-Pulsmuster versorgt, sodass sich der Motor mit einer entsprechend geringeren Geschwindigkeit bewegt und den Wischerarm über die Frontscheibe bewegt. Wird die Parkposition erreicht, schaltet das Steuergerät die PWM für den Motor wieder ab. In der Betriebsart Automatik oder Regensensor wird das vom Regensensor kommende Signal ausgewertet. Besteht eine entsprechende Benetzung der Scheibenoberfläche im Bereich des Sensors, wird der Wischer mit einem definierten PWM-Muster angesteuert, sodass sich der Motor bewegt und den Scheibenwischer über die Scheibenoberfläche bewegt. In der Betriebsart Wischen kann abhängig von der gewünschten Geschwindigkeitsstufe der Motor mit einem definierten PWM-Muster versorgt werden, der den Motor bzw. den Wischerarm in den unterschiedlichen Geschwindigkeiten über die Scheibenoberfläche bewegt.

In einem Ausführungsbeispiel steht der Drehwinkelsensor in direkter Verbindung zum Wischerarm. Es wird bevorzugt ein Drehwinkelsensor mit Stromsignal verwendet. Der Winkel von 0° bis 360° wird hierbei bevorzugt auf den Stromwertebereich von 4 mA bis 20 mA abgebildet. Durch die Definition eines Wertes für die Parkposition und Berücksichtigung eines vom System und dessen Dynamik abhängigen Fangbereiches (Toleranzbereich) ist das Steuergerät 102 in der Lage den Wischerarm in die Parkposition zu führen und bei Erreichen der Position den Motor abzuschalten.

Durch die Verwendung des Drehwinkelsensors in einem Ausführungsbeispiel ist es mit dem System auch möglich, jede andere Position auf der Scheibenoberfläche zu definieren. Dies ist besonders vorteilhaft, wenn der Wischerarm zum Zwecke der Frontscheibenreinigung in die Mitte der Scheibe bewegt werden soll. Auch das Parken des Wischerarmes auf einer der beiden Umkehrpositionen wird damit softwaretechnisch möglich.

Im Fahrbetrieb kann es auch erforderlich sein, dass bei nachlaufenden Führerständen von Regionalzügen eine Mittigstellung des Scheibenwischers erforderlich ist, um das Abheben des Wischerarmes mit dem Wischerblatt aufgrund ungünstiger Strömungsverhältnisse in den seitlichen Umkehr- oder Parkpositionen zu vermeiden.

Der Regensensor wird in einem Ausführungsbeispiel durch das Steuergerät 102 mit Spannung versorgt. Da Regensensoren aus Infrarot-Sende- und Empfangsdioden bestehen und diese im Betrieb einem Alterungsprozess mit nachlassender Detektierungsleistung unterliegen, ist es vorteilhaft, diese Regensensoren, zum Zweck einer erhöhten Systemverfügbarkeit, nur dann mit Spannung zu versorgten, wenn das Signal des Sensors benötigt wird. Dafür hat das Steuergerät eine schaltbare Spannungsversorgung. Der Regensensor kann entweder-ein analoges oder ein PWM-Signal zur Verfügung stellen. Der Eingang des Steuergerätes besteht aus einem Tiefpass, um beide Spannungsformen für die weitere Verarbeitung im Mikrokontroller zu ermöglichen.

In Abhängigkeit der Scheibenbenetzung liefert der angeschlossene Regensensor ein veränderliches Spannungssignal, welches nach erfolgter Analog/Digital-Wandlung von der Betriebssoftware in die gewünschten Betriebsmodi, wie z. B. Wischen mit unterschiedlichen Geschwindigkeiten umgeformt wird.

Hat der Regensensor anstelle des wie oben beschriebenen analogen oder PWM Signals einen digitalen Bus-Anschluss, wie z. B. einem LIN-Bus-Anschluss, dann ist das Steuergerät mit einem entsprechenden LIN-Bus-Anschluss ausgeführt. Der LIN-Bus ist ein im Automotiv Bereich üblicher Datenbus für einfache Sensoren und Aktuatoren, wie z. B. Regensensor oder Wischerantriebe. LIN steht hierbei für "Local Interconnect Network".

Der Anschluss und der Betrieb des Scheibenwischermotors erfolgen über die weiteren Anschlussklemmen, die eine PWM-modulierte Spannung zur Verfügung stellen. Hierbei kann für eine EMV-gerechte Systemauslegung sowohl die Pulsweite bei fester Periodendauer wie auch die Periodendauer variiert werden. Der angeschlossene Scheibenwischermotor kann ein DC-Industriemotor, aber auch ein klassischer Scheibenwischermotor mit nur einem Bürstenpaar sein. Aufgrund des Tastverhältnisses der PWM verändert sich die mittlere Spannung am Motor. In Abhängigkeit dieser mittleren Spannung dreht sich der Motor dann mit entsprechend geringer oder größerer Drehzahl.

Durch den Einsatz des Drehwinkelsensors ist es auch möglich, die Bewegung des Wischerarmes und damit die Drehbewegung des Scheibenwischerantriebes zu überwachen. Blockierungen des Wischerarmes oder Behinderungen sind damit unmittelbar erkennbar, lange bevor der Wischermotor überhitzt oder sonst Schaden erleidet.

Durch geeignete Beschaltung von zwei oder mehreren Steuergeräten ist es auch möglich, einen synchronen Betrieb von zwei oder mehreren Scheibenwischerantrieben zu ermöglichen. Hierbei kann in einer einfachen Ausführung eine Synchronisation in ausgezeichneten Positionen, die bevorzugt die Umkehrpositionen sein können, erfolgen. Der erste Scheibenwischer, der in diese ausgezeichnete Position eingefahren ist, verharrt in dieser Position, bis der zweite und der dritte Scheibenwischer ebenfalls diese Position erreicht haben. Erst wenn alle Antriebe diese Synchronisationsposition erreicht haben, wird die weitere Bewegung der Scheibenwischer fortgesetzt. Im Falle einer Behinderung von einem oder mehreren Scheibenwischern kann auch ein Solobetrieb oder ein synchronisierter Teilbetrieb der verbleibenden Scheibenwischer durchgeführt werden.

In einer erweiterten Ausführung ist auch eine Synchronisation von 2 oder mehreren Scheibenwischern durch angepasste Geschwindigkeiten der Einzelsysteme durch Variation der PWM-Signale möglich. Hierbei wird jener Scheibenwischer, der sich zu langsam auf der Scheibe bewegt mit einer höheren PWM angesteuert. Damit erfährt dann dieser Scheibenwischer eine höhere mittlere Versorgungsspannung, die sich in einer höheren Drehzahl bemerkbar macht und den Scheibenwischer mit einer entsprechend angepassten höheren Verfahrgeschwindigkeit über die Frontscheibe bewegt und damit zu einer Synchronisation der Systeme führt. Scheibenwischer, die eine zu hohe Verfahrgeschwindigkeit aufweisen, können durch ein entsprechend modifiziertes PWM-Signal in Ihrer Drehzahl verringert werden.

In einer weiteren Ausführung eines Steuergerätes kann dieses auch mit einem elektropneumatischen Wischerantrieb kombiniert werden. Hierbei besitzt das Steuergerät anstelle der PWM mehrere digitale Ausgänge für den Anschluss von Pneumatikventilen. Das Steuergerät hat in dieser Ausführung wieder die oben beschriebenen Eingänge für die Betriebsmodi, den Drehwinkelgeber, den Regensensor und auch die oben beschriebenen Ausgänge, wie Spannungsversorgung für den Drehwinkelgeber und die einschaltbare Versorgung für den Regensensor, sowie die Ausgänge zu den Magnetventilen und den Informationsausgängen an die Fahrzeugleittechnik.

Fig. 3 zeigt eine Darstellung eines Steuergeräts 102 für ein Scheibenwischersystem in einem Gehäuse 330 gemäß einem Ausführungsbeispiel der vorliegenden Erfindung. Bei dem Steuergerät 102 kann es sich um ein Ausführungsbeispiel eines in Fig. 1 und Fig. 2 beschriebenes Steuergerät 102 handeln. Dabei ist das Gehäuse 330 in einem Ausführungsbeispiel aus Stahlblech gefertigt. In einem Ausführungsbeispiel ist das Gehäuse 330 aus einem nicht rostenden Material gefertigt. Je nach Ausführungsbeispiel weist das Gehäuse 330 einen Oberflächenschutz auf.

Auf einer Seite des Gehäuses 330 sind ein 20-poliger Stecker 332 sowie ein Sub-Min-D-Stecker 334 für eine Diagnose angeordnet. Der 20-polige Stecker 332 umfasst die Betriebsfunktionsschnittstelle, die Sensor-Schnittstelle sowie den Steuerausgang. Auf einer weiteren Seite des Gehäuses 330 ist eine Klammer 336 für eine Schirmauflage, eine Ehrungsschraube sowie eine Schirmleitungsschraube angeordnet.

Zwei gegenüberliegende Seiten des Gehäuses 330 weisen einen nach außen gebogenen Abschnitt auf, in dem je zwei Längsaussparungen angeordnet sind. Die Längsaussparungen sind ausgebildet, das Gehäuse 330 an einem Träger zu befestigen.

Fig. 4 zeigt einen Ablaufplan eines Verfahrens 400 zum Betreiben eines Scheibenwischersystems für ein Schienenfahrzeug gemäß einem Ausführungsbeispiel der vorliegenden Erfindung. Bei dem Scheibenwischersystem kann es sich um ein in Fig. 1 gezeigtes Scheibenwischersystem 104 für ein Schienenfahrzeug 100 handeln. Das Verfahren 400 umfasst einen Schritt 440 des Einlesens eines Betriebsmodus-Signals, einen Schritt 442 des Erstellens eines Steuersignals sowie einen Schritt 444 des Ausgebens des Steuersignals. Das Betriebsmodus-Signal repräsentiert eine Information über einen zu steuernden Betriebsmodus des Scheibenwischersystems. Im Schritt 442 des Erstellens wird das Steuersignal unter Verwendung des Betriebsmodus-Signals erstellt. Bei dem im Schritt 444 des Ausgebens ausgegebenen Steuersignal handelt es sich je nach Ausführungsbeispiel um ein analoges, ein digitales oder ein analog-digitales Signal.

Optional kann im Schritt 440 des Einlesens ein Sensorsignal eingelesen wird. Wenn im Schritt 440 des Einlesens ein Sensorsignal eingelesen wird, so wird im Schritt 442 des Erstellens das Steuersignal unter Verwendung des Sensorsignals erstellt.

In einem Ausführungsbeispiel umfasst das Verfahren 400 einen optionalen Schritt 446 des Bereitstellens einer Versorgungsspannung für einen Sensor. Bei dem Sensor kann es sich um den Sensor handeln, dessen Sensorsignal im Schritt 440 des Einlesens eingelesen wird.

In einem Ausführungsbeispiel wird eine Variante des in Fig. 4 beschriebenen Verfahrens 400 in einem Computer-Programmprodukt umgesetzt. Das Computer-Programmprodukt kann auf einer in Fig. 1 bis Fig. 3 beschriebenen Steuereinrichtung eines Steuergeräts für ein Scheibenwischersystem ausgeführt werden.

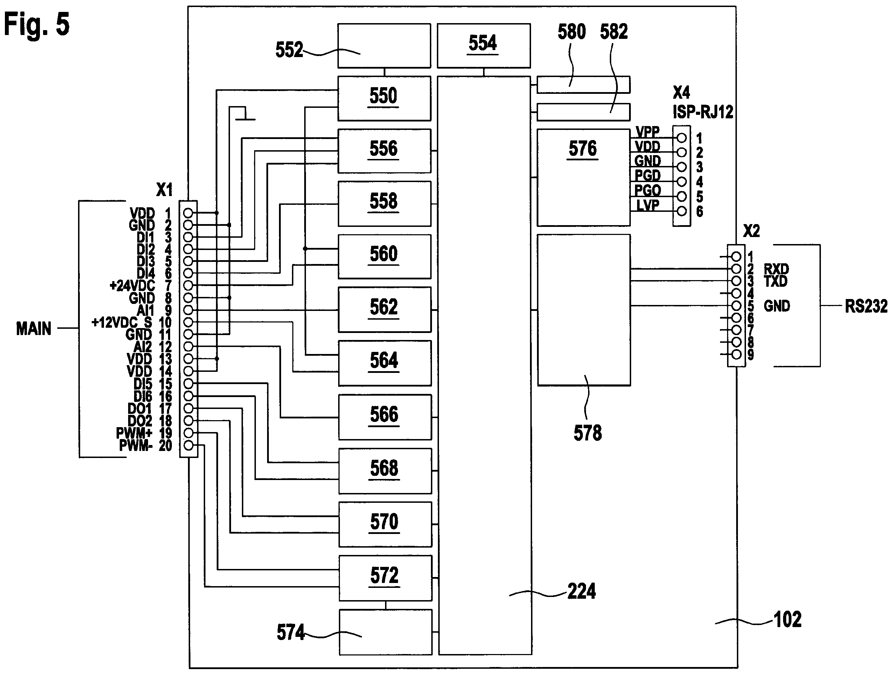

Fig. 5 zeigt ein Blockschaltbild eines Steuergeräts 102 für ein Scheibenwischersystem gemäß einem Ausführungsbeispiel der vorliegenden Erfindung. Bei dem Scheibenwischersystem kann es sich um das in Fig. 1 beschriebene und mit dem Bezugszeichen 104 beschriftete Scheibenwischersystem handeln. Im Zentrum des Blockschaltbilds zeigt der Block 224 die in Fig. 2 beschriebene Steuereinrichtung 224, welche in dem gezeigten Ausführungsbeispiel in Fig. 5 als ein Mikrocontroller bzw. als eine CPU dargestellt ist.

Ein Block 550 repräsentiert einen TVS/ESD-Filter mit LD-Schutz und einem Rausch-Filter. Der Block 550 ist mit dem Block 552 verbunden der einen Spannungsregler für eine CPU repräsentiert. Der Block 552 ist ausgebildet, 5 VDC bzw. 50 mA bereitzustellen. Der Block 552 ist verbunden mit einem Block 554 der einen VDD-Monitor repräsentiert. Die Blöcke 556-582 sind alle wie der Block 554 mit der Steuereinrichtung 224 verbunden. Der Block 556 repräsentiert einen Digital-Eingang DI1, DI2, DI3 für eine Wisch-Wasch-Funktion. Der Block 558 repräsentiert einen Digital-Eingang DI4 für eine Waschfunktion. Der Block 560 repräsentiert einen zusätzlichen Spannungsregler für 24 VDC und 100 mA. Der Block 562 repräsentiert einen Analogeingang Al1 für die Scheibenwischerposition. Der Analogeingang Al1 weist ein Signal im Bereich zwischen 4 mA und 20 mA auf. Der Block 564 repräsentiert einen geschalteten zusätzlichen Spannungsregler für 12 VDC und 100 mA. Der Block 566 repräsentiert einen Analogeingang Al zwei für einen Regensensor, wobei dieser als offener Kollektor für ein PWM-Signal ausgebildet ist. Der Block 568 repräsentiert einen Digital-Eingang DI5, DI6 für einen regen Sensor mit zwei Geschwindigkeiten. Der Block 570 repräsentiert einen statischen Digital-Ausgang DO1, DO2. Der Block 562 repräsentiert ein Leistungs-PWM-Signal mit einem EMV-Filter. Der Block 574 repräsentiert einen NTC-Temperaturmonitor. Der Block 574 ist weiterhin mit dem Block 572 verbunden. Der Block 576 repräsentiert einen Mikrochip mit einem ISP-Interface. Das ISP-Interface ist über einen RJ12-Anschluß nach außen geführt. Der Block 578 repräsentiert eine serielle Schnittstelle, welche als eine Niederspannungs-RS-232-Schnittstelle 334 ausgeführt ist. Der Block 580 steht für eine grüne Status-LED, der Block 582 für eine rote Status-LED. Von den Blöcken 550,556-572 verlaufen Leitungen zu einer mit MAIN 332 bezeichneten Schnittstelle. Die mit MAIN 332 bezeichneten Schnittstelle umfasst die Sensor-Schnittstelle sowie den Steuerausgang.

Das in Fig. 5 gezeigte Blockschaltbild repräsentiert Ein-und Ausgänge eines Steuergeräts für PWM-Betrieb eines Scheibenwischerantriebs.

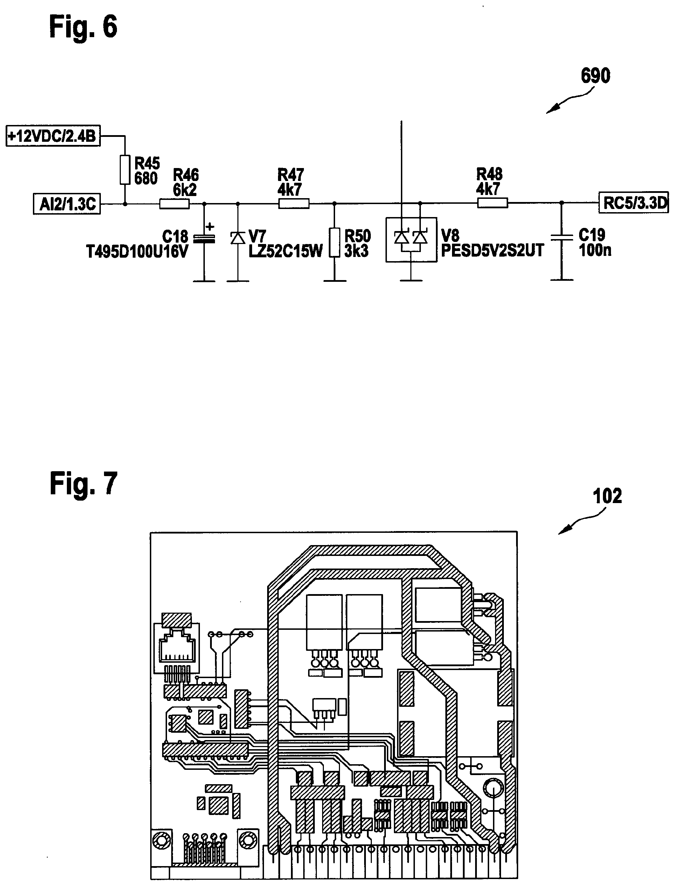

Fig. 6 zeigt einen Schaltplan einer Eingangsbeschaltung 690 für eine Auswertung eines Regensensors für ein Steuergerät gemäß einem Ausführungsbeispiel der vorliegenden Erfindung. Bei dem Regensensor sowie dem Steuergerät kann es sich um Ausführungsbeispiele der in Fig. 1 gezeigten Komponenten handeln. Die in Fig. 6 gezeigte Eingangsbeschaltung für eine Auswertung des Regensensors besteht aus einem Tiefpass und einer Schutzbeschaltung des Mikrocontrollereingangs. Dabei ist unter dem Mikrocontrollereingang eine Sensor-Schnittstelle eines in Fig. 1 gezeigten Steuergeräts zu verstehen oder alternativ ein Eingang einer in Fig. 2 gezeigten Steuereinrichtung in Form eines Mikrocontrollers bzw. einer CPU.

Bei dem Tiefpass handelt es sich um eine R-C-Kombination des Widerstandes der 46 mit dem Kondensator C 18. Die Schutzbeschaltung des Mikrocontrollereingangs umfasst die restlichen dargestellten Komponenten.

Zwischen einem 12-V-Eingang sowie dem Analogeingang Al2 ist der Widerstand R 45 mit 680 Ohm angeordnet. In einer Reihe zwischen dem Analogeingang Al2 und dem Mikrocontrollereingang RC5 sind drei Widerstände R46, R47, R48 angeordnet. Der Widerstand R46 weist einen Widerstand von 6,2 Kilo-Ohm auf. Die Widerstände R47 und R48 weisen jeweils einen Widerstand von 4,7 Kilo-Ohm auf. Die Verbindung zwischen den beiden Widerständen R46 und R47 ist über eine Kapazität C 18 und eine Diode V7 jeweils mit Masse verbunden. Zwischen dem Widerstand R48 und dem Mikrocontrollereingang RC5 ist eine mit Masse verbundene Kapazität C19 mit 100 Nano-Farad angebunden. Mit der Verbindung zwischen den Widerständen R47 und R48 ist ein Widerstand R50 mit 3,3 Kilo-Ohm und eine Diode V8 verbunden, wobei letztere R50, V8 auch mit Masse verbunden sind.

Fig. 7 zeigt ein Platinenlayout für ein Steuergerät 102 für ein Scheibenwischersystem gemäß einem Ausführungsbeispiel der vorliegenden Erfindung. Bei dem Steuergerät 102 kann es sich um ein Ausführungsbeispiel eines in Fig. 1 bis Fig. 3 oder Fig. 5 beschriebenes Steuergerät 102 handeln. Bei dem Scheibenwischersystem kann es sich um das mit dem Bezugszeichen 104 bezeichnete und in Fig. 1 beschriebene Scheibenwischersystem 104 für ein Schienenfahrzeug handeln. Das in Fig. 7 gezeigte Platinen Layout ist geeignet für ein Steuergerät 102 für einen pulsweitenmodulierten betriebenen Scheibenwischerantrieb eines Scheibenwischerssystems. Somit zeigt Fig. 7 ein Ausführungsbeispiel eines Steuergeräts 102 für einen elektrisch betriebenen Scheibenwischerantrieb.

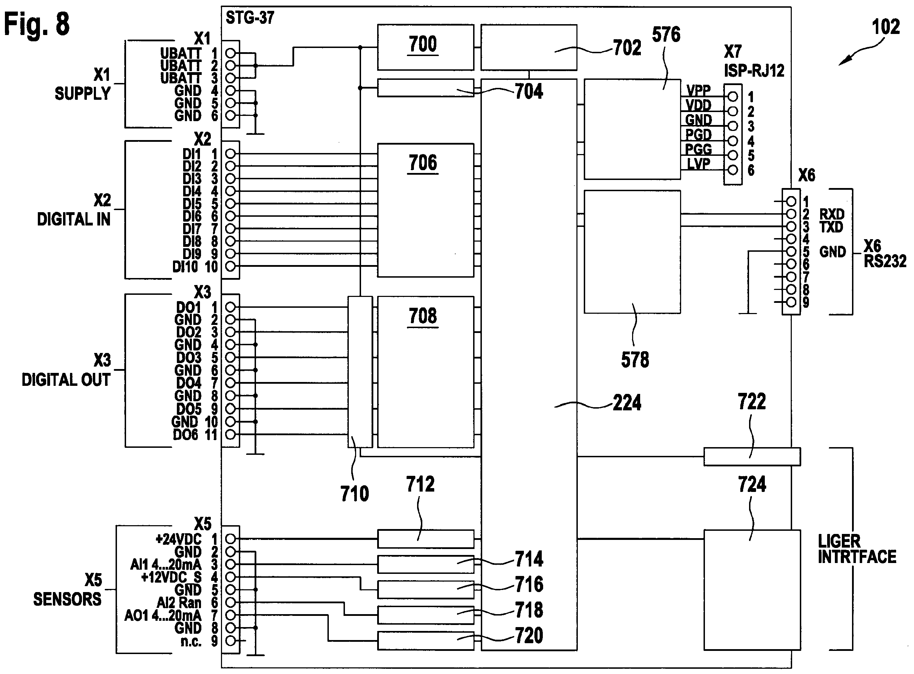

Fig. 8 zeigt ein Blockschaltbild eines Steuergeräts 102 für ein Scheibenwischersystem gemäß einem Ausführungsbeispiel der vorliegenden Erfindung. Bei dem Steuergerät 102 kann es sich um ein Ausführungsbeispiel eines in Fig. 1 bis Fig. 3, Fig. 5 oder Fig. 7 beschriebenes Steuergerät 102 handeln. Bei dem Scheibenwischersystem kann es sich um ein Ausführungsbeispiel eines in Fig. 1 beschriebenen Scheibenwischersystems 104 handeln. Das in Fig. 8 gezeigte Blockschaltbild zeigt ein Ausführungsbeispiel mit Eingängen und Ausgängen für ein Steuergerät 102 zum Betrieb an einem elektropneumatischen Scheibenwischerantrieb. Rund um die als CPU bzw. Mikrocontroller ausgeführte Steuereinrichtung 224 sind die das Steuergerät 102 kennzeichnenden Schnittstellen angeordnet, wobei die Schnittstellen über Blöcke mit der Steuereinrichtung 224 verbunden sind.

X6 bezeichnet eine als RS-232 Schnittstelle ausgebildete Schnittstelle die über den Block 578 mit der Steuereinrichtung 224 verbunden ist die Schnittstelle X7 ist über den ein Mikrochip-ISP-Interface bereitstellenden Block 506. 70 mit der Steuereinrichtung 224 verbunden.

Der Block 700 repräsentiert einen DC/DC-Konverter, der 110 V Gleichspannung in 24 V Gleichspannung wandelt. Der Block 700 ist mit einem weiteren Spannungsregler, der durch den Block 702 repräsentiert wird, verbunden, wobei über den Spannungsregler 5 V Gleichspannung der Steuereinrichtung 224 zugeführt werden. Der Block 704 repräsentiert eine Versorgungsspannungsüberwachung, die parallel zum Block 700 geschaltet ist. Der Block 700 ist mit der Schnittstelle X1 verbunden, welche bezogen auf das in Fig. 2 dargestellte Ausführungsbeispiel mit dem Versorgungsspannungsanschluss 228 korrespondiert. Der Block 706 repräsentiert einen Digital-Eingang für 110 V und ist mit dem Digital-Eingang X2 bzw. den Digitaleingangsleitungen DI1 bis DI10 verbunden. Der Block 708 repräsentiert einen Digitalausgang für 110 V und ist mit der Schnittstelle X3 verbunden, die die Digital-Ausgänge DO1 bis DO6 umfasst. Für jeden Digital-Ausgang DO1 bis DO6 steht ein korrespondierender Masseanschluss zur Verfügung. Zwischen den Block 708 und die Schnittstelle X3 ist ein Block 710 angeordnet, der einen Ausgangs-Monitor repräsentiert.

Die Sensor-Schnittstelle X5 ist mit den Blöcken 712-720 verbunden. Der Block 712 repräsentiert einen Analogausgang mit 24 V Gleichspannung. Der Block 714 repräsentiert einen Analogstromeingang Al1 für 4 mA bis 20 mA. Der Block 716 repräsentiert einen analogen Ausgang mit 12 V Gleichspannung. Der Block 718 repräsentiert einen Analogeingang für einen regen Sensor. Der Block 720 repräsentiert einen Analogausgang für einen Bereich von 4 mA bis 20 mA. Die Blöcke 722 und 724 betreffen eine Benutzerschnittstelle. Der Block 722 repräsentiert einen Schlüsseleingang. Der Block 724 repräsentiert eine Treiberstufe für ein LED-Array.

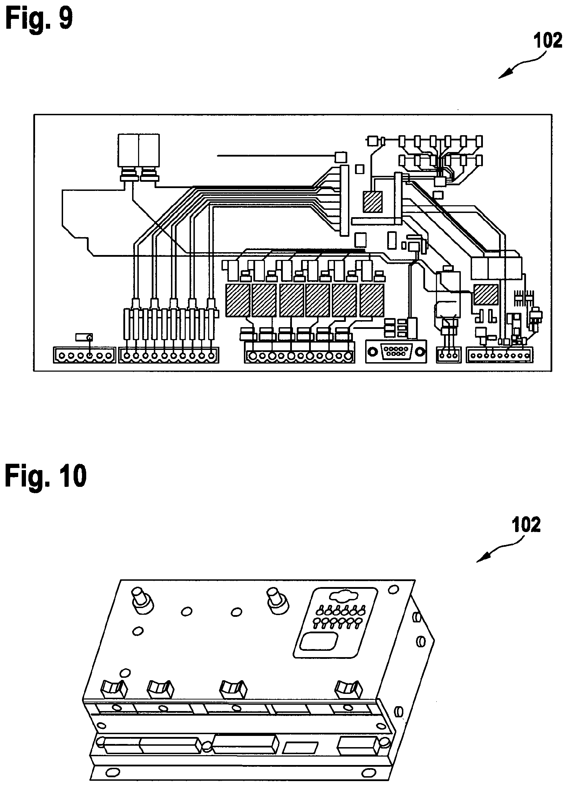

Fig. 9 zeigt ein Platinenlayout für ein Steuergerät für ein Scheibenwischersystem gemäß einem Ausführungsbeispiel der vorliegenden Erfindung. Bei dem Steuergerät 102 kann es sich um ein Ausführungsbeispiel eines in Fig. 1 bis Fig. 3, Fig. 5 oder Fig. 7 beschriebenes Steuergerät 102 handeln. Bei dem Scheibenwischersystem kann es sich um ein Ausführungsbeispiel eines in Fig. 1 beschriebenen Scheibenwischersystems 104 handeln. Bei dem in Fig. 9 gezeigten Platinenlayout handelt es sich um ein Platinenlayout für ein Steuergerät für einen elektropneumatischen Scheibenwischerantrieb.

Fig. 10 zeigt eine Darstellung eines Steuergeräts für ein Scheibenwischersystem in einem Gehäuse gemäß einem Ausführungsbeispiel der vorliegenden Erfindung. Bei dem Steuergerät 102 kann es sich um ein Ausführungsbeispiel eines in Fig. 1 bis Fig. 3, Fig. 5 oder Fig. 7 beschriebenes Steuergerät 102 handeln. Bei dem Scheibenwischersystem kann es sich um ein Ausführungsbeispiel eines in Fig. 1 beschriebenen Scheibenwischersystems 104 handeln. Das in Fig. 10 dargestellte Steuergerät 102 in einem Gehäuse 330 weist vier Steckverbinder, einen Diagnoseanschluss 334, eine LED-Rechtanzeige, Kabelfixierungen, eine Befestigungsmöglichkeit für Kabelschirme sowie für Befestigungsschrauben für einen Masseanschluss und einen Schirmanschluss auf. Die vier Steckverbinder dienen als mechanischer Anschluss für eine Betriebsfunktionsschnittstelle, eine Sensor-Schnittstelle einen Steuerausgang sowie für den Versorgungsspannungsanschluss wie diese in Fig. 2 dargestellt sind.

Die beschriebenen Ausführungsbeispiele sind nur beispielhaft gewählt und können miteinander kombiniert werden.

### Bezugszeichenliste

- 100: Schienenfahrzeug
- 102: Steuergerät
- 104: Scheibenwischersystem
- 106: Scheibenwischer
- 108: Antrieb, Scheibenwischerantrieb
- 110: Sensor
- 112: Sensorsignal
- 114: Steuersignal
- 116: Information über Betriebsmodus, Betriebsmodus-Signal
- 118: Versorgungsspannung, anliegende Spannung

- 220: Betriebsfunktionsschnittstelle
- 222: Sensor-Schnittstelle
- 224: Steuereinrichtung
- 226: Steuerausgang
- 228: Versorgungsspannungsanschluss

- 330: Gehäuse
- 332: 20-poliger Stecker
- 334: Sub-Min-D-Stecker
- 336: Klammer für eine Schirmauflage

- 400: Verfahren zum Betreiben eines Scheibenwischerssystems
- 440: Schritt des Einlesens
- 442: Schritt des Erstellens
- 444: Schritt des Ausgebens
- 446: Schritt des Bereitstellens

- 550 - 582: Blöcke eines Steuergeräts

- 690: Eingangsbeschaltung
- R45: Widerstand
- R46: Widerstand
- R47: Widerstand
- R48: Widerstand
- R50: Widerstand
- C18: Kapazität
- C19: Kapazität
- V7: Diode
- V8: Diode

- 700 - 724: Blöcke eines Steuergeräts

## Patentansprüche

1. Steuergerät (102) für ein Scheibenwischersystem (104) für ein Schienenfahrzeug (100), mit folgenden Merkmalen:
einer Betriebsfunktionsschnittstelle (220), wobei die Betriebsfunktionsschnittstelle (220) ausgebildet ist eine Information (116) über einen Betriebsmodus des Scheibenwischersystems (104) zu empfangen;
einer Sensor-Schnittstelle (222), die ausgebildet ist, zumindest ein analoges und/oder digitales Sensorsignal (112) zu empfangen;
einer Steuereinrichtung (224), welche ausgebildet ist, unter Verwendung der Information (116) über den Betriebsmodus und/oder des Sensorsignals (112) zumindest ein Steuersignal (114) für das Scheibenwischersystem (104) bereitzustellen;
einem Steuerausgang (226), der ausgebildet ist, das zumindest eine Steuersignal (114) auszugeben; und
einem Versorgungsspannungsanschluss (228), der ausgebildet ist, eine anliegende Spannung (118) Schnittstellen (220, 222, 226) und Einrichtungen (224) des Steuergeräts (102), insbesondere der Steuereinrichtung (224), bereitzustellen,
**dadurch gekennzeichnet, dass**
die Betriebsfunktionsschnittstelle (220) und/oder die Sensor-Schnittstelle (222) als eine Busschnittstelle, insbesondere LIN-Bus-Schnittstelle ausgebildet ist.

2. Steuergerät (102) gemäß Anspruch 1, bei dem der Steuerausgang (226) ausgebildet ist, zumindest ein pulsweitenmoduliertes Signal auszugeben, um zumindest einen Elektromotor und/oder einen elektrischen Scheibenwischerantrieb (104) anzutreiben, und/oder eine Mehrzahl digitaler Signale auszugeben, um zumindest ein Magnetventil eines elektropneumatischen Scheibenwischerantriebs (104) anzusteuern.

3. Steuergerät (102) gemäß einem der vorangegangenen Ansprüche, bei dem die Sensor-Schnittstelle (222) zumindest einen schaltbaren Versorgungsanschluss für einen Drehwinkelsensor (110) und/oder für einen Regensensor (110) umfasst.

4. Steuergerät (102) gemäß einem der vorangegangenen Ansprüche, bei dem die Betriebsfunktionsschnittstelle (220) und/oder die Sensor-Schnittstelle (222) ausgebildet ist, zumindest ein Stromsignal zwischen 0 mA und 20 mA und/oder zumindest ein Spannungssignal und/oder zumindest ein PWM-Signal zu empfangen und/oder entsprechend einer Auswertungsvorschrift auszuwerten.

5. Steuergerät (102) gemäß einem der vorangegangenen Ansprüche, wobei das Steuergerät (102) ein Gehäuse (330) aufweist, wobei das Gehäuse (330) aus Stahlblech und/oder aus nicht-rostendem Material gefertigt ist und/oder einen Oberflächenschutz aufweist.

6. Verfahren (400) zum Betreiben eines Scheibenwischersystems (104) für ein Schienenfahrzeug (100) gemäß einem der Ansprüche 1 bis 5, mit folgenden Schritten:
Einlesen (440) eines Betriebsmodus-Signals (116), wobei das Betriebsmodus-Signal (116) eine Information über einen zu steuernden Betriebsmodus des Scheibenwischersystems (104) repräsentiert;
Erstellen (442) eines Steuersignals (114) unter Verwendung des Betriebsmodus-Signals (116); und
Ausgeben (444) des Steuersignals (114) an das Scheibenwischersystem (104) als ein analoges und/oder digitales Signal.

7. Verfahren (400) gemäß Anspruch 6, bei dem im Schritt (440) des Einlesens ein Sensorsignal (112) eingelesen wird, wobei im Schritt (442) des Erstellens das Steuersignal (114) unter Verwendung des Sensorsignals (112) erstellt wird.

8. Verfahren (400) gemäß einem der Ansprüche 6 bis 7, mit einem Schritt (446) des Bereitstellens einer Versorgungsspannung für einen Sensor (110).

9. Computer-Programmprodukt mit Programmcode zur Durchführung des Verfahrens (400) zum Betreiben eines Scheibenwischersystems (104) für ein Schienenfahrzeug (100) nach einem der Ansprüche 6 bis 9, wenn das Computer-Programmprodukt auf einem Steuergerät (102) für ein Scheibenwischersystem (104) für ein Schienenfahrzeug (100) gemäß einem der Ansprüche 1 bis 5 ausgeführt wird.

## Claims

1. A control unit (102) for a windscreen wiper system (104) for a rail vehicle (100) having the following features:
an operating function interface (220), this operating function interface (220) being designed to receive an item of information (116) about an operating mode of the windscreen wiper system (104);
a sensor interface (222) that is designed to receive at least one analogue and/or digital sensor signal (112);
a control device (224) that is designed to provide at least one control signal (114) for the windscreen wiper system (104) using the information (116) about the operating mode and/or the sensor signal (112);
a control output (226) that is designed to output the at least one control signal (114); and
a supply voltage connection (228) that is designed to provide a given voltage (118) to interfaces (220, 222, 226) and devices (224) of the control unit (102), in particular to the control device (224),
**characterised in that**
the operating function interface (220) and/or the sensor interface (222) is designed as a bus interface, in particular as a LIN bus interface.

2. A control unit (102) according to claim 1, in which the control output (226) is designed to output at least one pulse-width-modulated signal in order to drive at least one electric motor and/or electrical windscreen wiper drive (104), and/or to output a plurality of digital signals in order to activate at least one solenoid valve of an electropneumatic windscreen wiper drive (104).

3. A control unit (102) according to any one of the preceding claims, in which the sensor interface (222) comprises at least one switchable supply port for an angle of rotation sensor (110) and/or for a rain sensor (110).

4. A control unit (102) according to any one of the preceding claims, in which the operating function interface (220) and/or the sensor interface (222) is designed to receive at least one current signal of between 0 mA and 20 mA and/or at least one voltage signal and/or at least one PWM signal, and/or to evaluate them in accordance with a set of evaluation rules.

5. A control unit (102) according to any one of the preceding claims, the control unit (102) having a housing (330), this housing (330) being made from steel sheet and/or from a stainless material and/or having a surface protection.

6. A method (400) for operating a windscreen wiper system (104) for a rail vehicle (100) according to any one of claims 1 to 5, having the following steps:
the inputting (440) of an operating mode signal (116), the operating mode signal (116) representing an item of information about a windscreen wiper system (104) operating mode to be controlled;
the production (442) of a control signal (114) using the operating mode signal (116); and
the outputting (444) of the control signal (114) to the windscreen wiper system (104) as an analogue and/or digital signal.

7. A method (400) according to claim 7, in which a sensor signal (112) is input in the inputting step (440) and the control signal (114) is produced using the sensor signal (112) in the production step (442).

8. A method (400) according to either of claims 7 or 8, having a step (446) involving the provision of a supply voltage for a sensor (110).

9. A computer program product with program code for carrying out the method (400) in order to operate a windscreen wiper system (104) for a rail vehicle (100) according to any one of claims 6 to 9 when the computer program product is executed on a control unit (102) for a windscreen wiper system (104) for a rail vehicle (100) according to any one of claims 1 to 5.

## Revendications

1. Appareil (102) de commande d'un système (104) d'essuie-glace d'un véhicule (100) ferroviaire, ayant les caractéristiques suivantes :
une interface (220) de fonction de fonctionnement, l'interface (220) de fonction de fonctionnement étant constituée pour recevoir une information (116) sur un mode de fonctionnement du système (104) d'essuie-glace ;
une interface (222) de capteur, qui est constituée pour recevoir au moins un signal (112) de capteur analogique et/ou numérique ;
un dispositif (224) de commande, qui est constitué pour mettre à disposition, en utilisant l'information (116) sur le mode de fonctionnement et/ou le signal (112) du capteur, au moins un signal (114) de commande du système (104) d'essuie-glace,
une sortie (226) de commande, qui est constituée pour donner le au moins un signal (114) de commande ; et
une borne (228) de tension d'alimentation, qui est constituée pour mettre à disposition une tension (118) s'appliquant aux interfaces (220, 222, 226) et au dispositif (224) de l'appareil (102) de commande, notamment au dispositif (224) de commande,
**caractérisé en ce que**
l'interface (220) de fonction de fonctionnement et/ou l'interface (222) de capteur est constituée sous la forme d'une interface de bus, notamment d'une interface de bus LIN.

2. Appareil (102) de commande suivant la revendication 1, dans lequel la sortie (226) de commande est constituée pour donner au moins un signal modulé en largeur d'impulsion, afin d'entraîner au moins un moteur électrique et/ou un entraînement (104) électrique d'essuie-glace et/ou pour donner une pluralité de signaux numériques, afin de commander au moins une électrovanne de l'entraînement (104) électropneumatique d'essuie-glace.

3. Appareil (102) de commande suivant l'une des revendications précédentes, dans lequel l'interface (222) de capteur comprend au moins une borne d'alimentation pouvant être commutée pour un capteur (110) d'angle de rotation et/ou un capteur (110) de pluie.

4. Appareil (102) de commande suivant l'une des revendications précédentes, dans lequel l'interface (220) de fonction de fonctionnement et/ou l'interface (222) de capteur est constituée pour recevoir au moins un signal de courant compris entre 0 mA et 20 mA et/ou au moins un signal de tension et/ou au moins un signal PWM et/ou l'exploiter conformément à une prescription d'exploitation.

5. Appareil (102) de commande suivant l'une des revendications précédentes, dans lequel l'appareil (102) de commande a un boîtier (330), le boîtier (330) étant en tôle d'acier et/ou en matériau inoxydable et/ou ayant une protection de surface.

6. Procédé (400) pour faire fonctionner un système (104) d'essuie-glace d'un véhicule (100) ferroviaire suivant l'une des revendications 1 à 5, comprenant les stades suivants :
on lit (440) un signal (116) de mode de fonctionnement, le signal (116) de mode de fonctionnement représentant une information sur un mode de fonctionnement à commander du système (104) d'essuie-glace ;
on élabore (442) un signal (114) de commande, en utilisant le signal (116) de mode de fonctionnement ; et
on donne (444) le signal (114) de commande au système (104) d'essuie-glace, sous la forme d'un signal analogique et/ou numérique.

7. Procédé (400) suivant la revendication 6, dans lequel, dans le stade (440) de lecture, on lit un signal (112) de capteur, dans lequel, dans le stade (442) de l'élaboration, on élabore le signal (114) de commande en utilisant le signal (112) de capteur.

8. Procédé (400) suivant l'une des revendications 6 à 7, comprenant un stade (446) de mise à disposition d'une tension d'alimentation d'un capteur (110).

9. Produit de programme d'ordinateur ayant des codes de programme pour effectuer le procédé (400), afin de faire fonctionner un système (104) d'essuie-glace d'un véhicule (100) ferroviaire suivant l'une des revendications 6 à 9, lorsque le produit de programme d'ordinateur est exécuté sur un appareil (102) de commande d'un système (104) d'essuie-glace d'un véhicule (100) ferroviaire, suivant l'une des revendications 1 à 5.
